# EUROPEAN PATENT SPECIFICATION

(11) **EP 0 686 579 B1**
(45) Date of publication and mention of the grant of the patent: **07.04.1999**
(21) Application number: 95830242.4
(22) Date of filing: 09.06.1995
(51) Int. Cl.: B65F 1/00, B65F 1/14, B65F 3/00, B65F 1/10

(54) **Apparatus suitable for separately receiving, compacting and storing solid urban waste**
Vorrichtung zum getrennten Aufnehmen, Verdichten und Lagern von Hausmüll
Dispositif pour reçevoir, comprimer et entreposer séparément des ordures ménagères

(30) Priority: 10.06.1994 IT RM940364
(43) Date of publication of application: 13.12.1995
(73) Proprietor: Calderini, Nazzareno, 06011 Loc. Fabbrecce di Città di Castello (PG) (IT); PONTI ENGINEERING S.r.l., 06011 Cerbara Città di Castello (PG) (IT)
(72) Inventor: Calderini, Nazzareno, I-06011 L Fabbrecce di Citta di Castello (IT)
(74) Representative: Sneider, Massimo

(56) References cited:
- EP-A- 0 600 808
- WO-A-91/13010
- WO-A-94/06576
- DE-A- 4 241 123
- DE-A- 4 321 784
- DE-U- 9 216 358
- FR-A- 2 691 384
- US-A- 5 257 577

## Description

It is common knowledge that elevated standards of living and growing levels of consumption, combined with the subsequent growth in the volume of refuse, represent a critically important problem in modern society.

Large cities, and by now small cities and towns as well, must deal with the problem od solid urban waste under emergency conditions in which the capacity of disposal sites is rapidly exhausted, incinerators are closed down on account of being undesired or inadequate, and it becomes increasingly difficult to find locations where new refuse-disposal facilities are accepted. In addition, there are the difficulties involved in calculating the expense of treating waste, which, at present, is transported from one part of the country to be other at increasingly higher costs.

It is obvious, therefore, that the problem must be faced and resolved by reducing the quantity of waste to be sent to the disposal sites.

This invention relates to an apparatus for separately receiving, compacting and storing different categories of solid urban waste.

German utility model DE 92 16 358 U describes a device, according to the preamble of claim 1, for processing and filling waste containers, wherein domestic and industrial waste may be introduced and stored or partially treated; the above mentioned patent provides for various containers wherein the waste is introduced, according to separately collected ractions, and may then be compressed or crushed by means of a handle. This apparatus however, altough it undoubtely represents a step forward, relies totally on the discretion of the user, with regard to the selection and checking of the waste separately introduced into the containers, with no automatic checking and treatment devices, which would make the use of such an apparatus much easier. The object of the present invention is to remedy this shortcoming by means of an apparatus as defined by claim 1. Such apparatus is provided with automatic devices for treating the waste, after it has been divided into separately collected fractions, by means of a specific control panel, and capable of automatically checking the correspondence between the type of waste selected on the control panel and the waste actually introduced into the apparatus, after the selection operation and before the treatment process begins.

The external appearance of the apparatus dealt with in the present invention may resemble that of a normal home appliance which can be placed inside a normal kitchen; the interior of the apparatus is subdivided into two zones: one for the insertion and compacting of the products to be disposed of, the other for the separate storage of the different types of waste.

A control panel is located on a portion of the apparatus which is easy to reach and well in sight; before proceeding with the introduction of the waste, the buttons on this panel are used to select the category of refuse to be disposed of, for example: glass, aluminum, plastic, etc..

The selection of the category of refuse on the external control panel activates, inside the machine, the rotation and positioning of the appropriate device for the pulverization and compacting of that category of waste, lining it up with the insertion hatch, and, depending on the type of object being disposed of, the simultaneous rotation and positioning of the collection basket meant to hold only that type of waste product. The in-put on the control panel of the type of waste being disposed of also may lead to the automatic opening of the hatch to the loading zone.

By analyzing one or more properties such as the electrical conductivity of the object being disposed of, or its paramagnetic and/or thermal characteristics, or its hardness, the machine confirms that the object inserted actually falls under the category selected.

The apparatus then initiates the treatment contemplated for that type of material, after which the treated material itself is deposited in the basket set aside for its category, located in the lower portion of the machine.

An electronic display, or a similar monitoring and alert device, may signal when the baskets are full.

A more in-depth understanding of the features briefly described in the preceding paragraphs can be gained through the detailed description which follows, provided with reference to the enclosed diagrams:

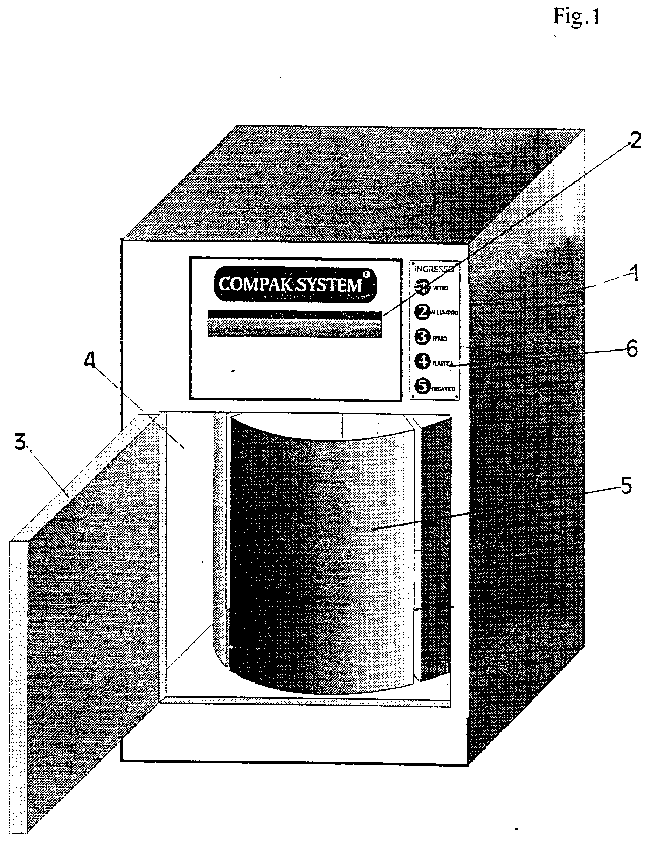

Figure 1 provides a frontal view of a preferred design of the apparatus dealt with in the present invention, showing the door of the space where the collection baskets are housed in its open position.

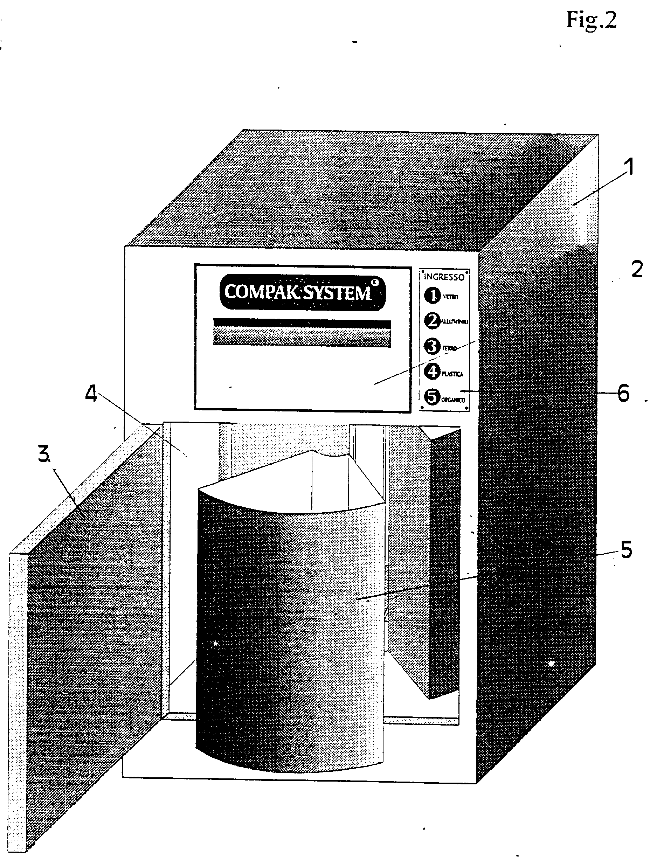

Figure 2 provides a frontal view of the apparatus, showing one of the collection baskets in a partially extracted position.

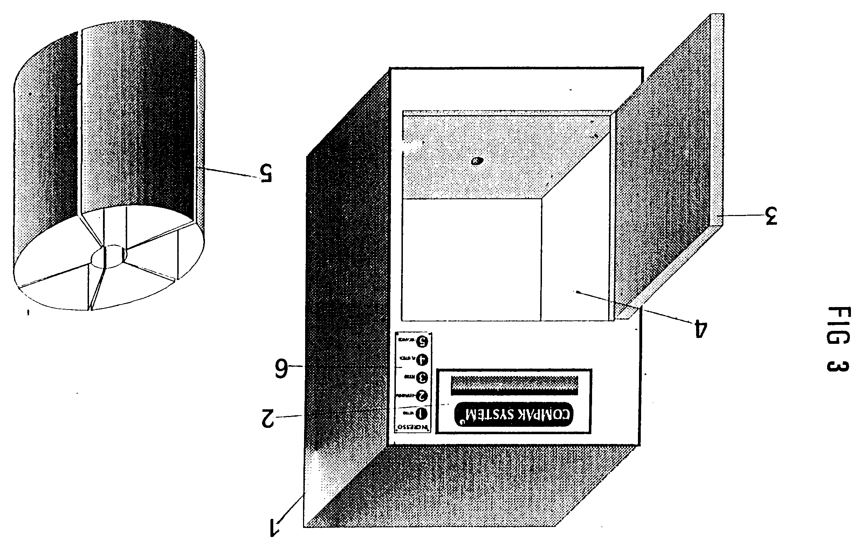

Figure 3 shows the apparatus with all of the collection baskets extracted.
Figure 4 provides a top and side view of the devices for the treatment of the waste.
Figure 5 provides a top and side view of the devices for treating the waste, showing the compactor in the inclined position designed for expulsion of the treated object.
Figure 6 provides a top and side view of the device for treating plastic waste, shown at the beginning of its cycle.

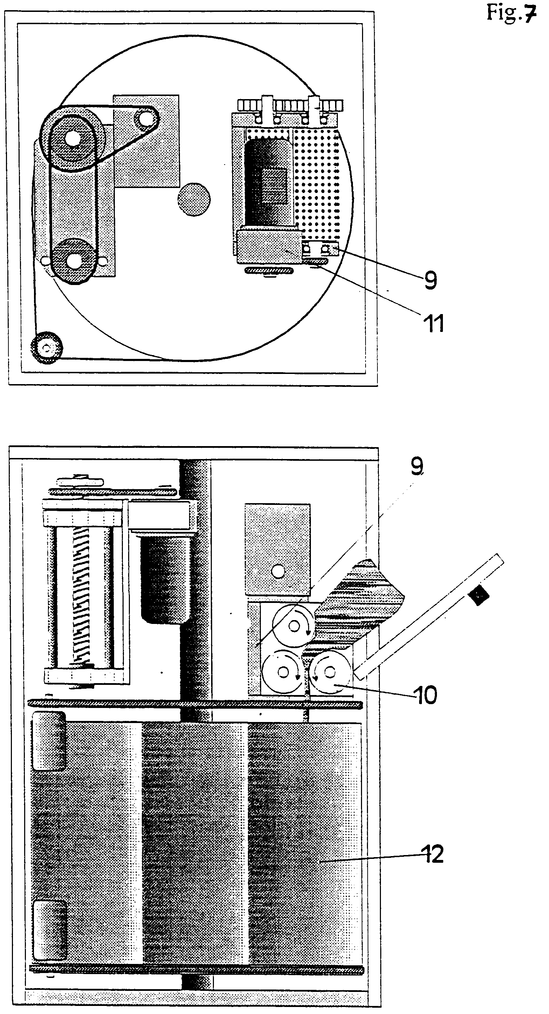

Figure 7 provides a top and side view of the device for treating plastic waste, shown in operation.

With regard to the aforementioned diagrams, one of the preferred versions of the apparatus 1 suitable for separately receiving, compacting and storing different categories of solid urban waste in a domestic setting, as stipulated in the present invention, has the dimensions and the external appearance of a washing machine, with a hatch 2 on the upper portion which closes off the opening used for the introduction of the waste; just below this hatch 2, is a door 3 which closes off the compartment 4 where the containers 5 are housed. Using a control panel 6, selection is made of the category of waste to be thrown away.

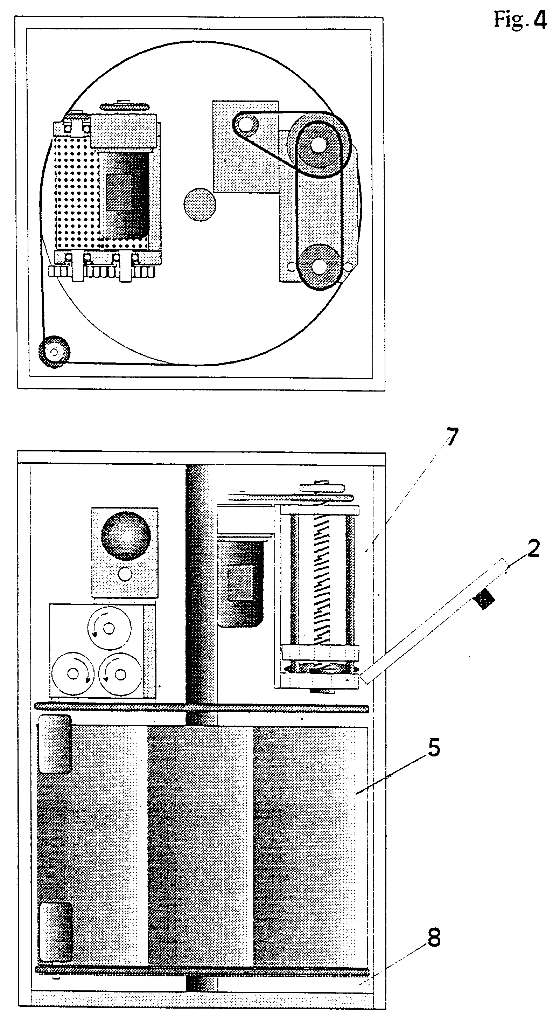

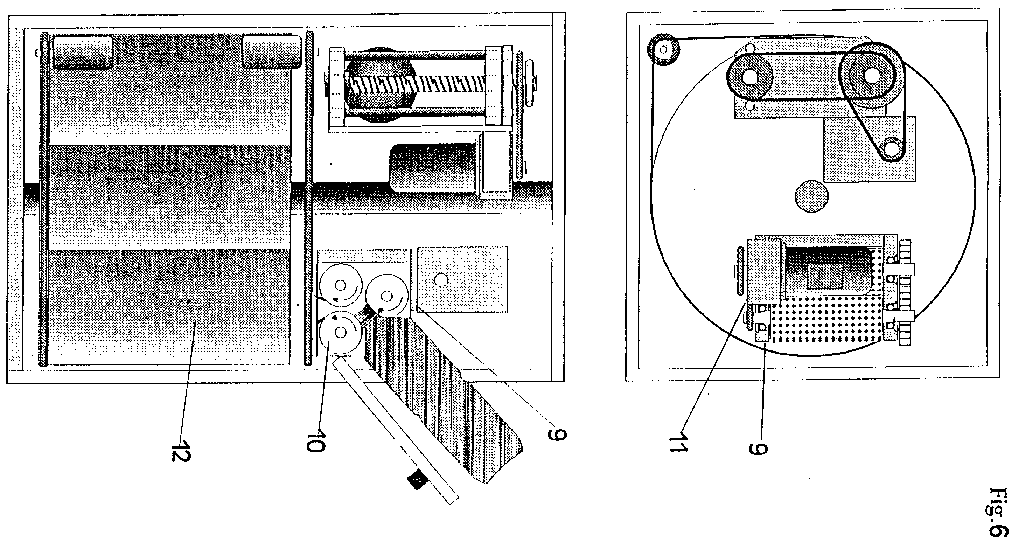

The interior of the apparatus is divided into two sections which are clearly visible in figures 4, 5 and 6: the upper section 7 houses the devices for the treatment of the waste, while the lower section 8 holds the containers 5 for the treated waste.

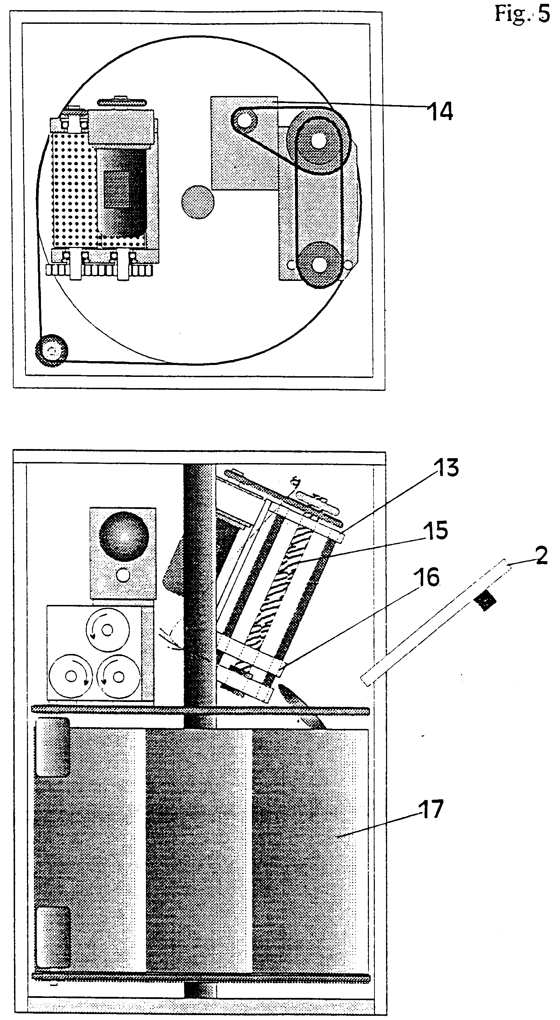

There are different treatment devices for the different categories of refuse. In the device for the treatment of organic materials, a drying phase is followed by a stage in which the material is pulverized using the appropriate machinery and then allowed to drop into the appropriate container below. When the user has selected the category of plastic waste, then the treatment device which rotates to the position of the insertion hatch 2 is the compactor 9, which consists of a number of rollers 10, three to give an example, arranged in close proximity one to the other and set in rotation by a motor, preferably electric; these rollers crush the plastic waste in question, for instance a bottle, between them, all the while pushing it in a forward direction. The rollers 10 can also be designed with teeth or protuberances which facilitate the crushing of the plastic containers by enhancing the evacuation of any air trapped inside of them; the plastic container, having been reduced in volume, then falls into the underlying basket 12, which collects only plastic; as an alternative, or as a supplement, to the treatment described above for plastic waste, air heated to an extremely high temperature can be used in order to reduce the volume of the object; a procedure similar to the one described for plastic is employed in the treatment of glass, which is ground up and then collected in the basket meant for that category. In the case of metal waste, the preliminary treatment involves pressing by the device 13 presented in figure 5, which is shown at the termination of the pressing operation; the press, driven by a motor 14, preferably electric, which is connected to the press itself by a set of belts, operates by moving the plate 16 along the worm screw 15 until the waste to be disposed of has been totally compressed; at the end of the compression process, the press assumes an inclined position, as shown in figure 5, in such a way that the compressed waste can fall into the proper container below.

The operation of the apparatus is extremely simple for the user, who, before introducing any waste into the apparatus, simply pushes one of the buttons on the control panel 6, specifying the type of waste to be thrown away, at which point both the treatment device and the storage basket for that category of waste are rotated into place and the hatch 2 for the introduction of the waste - which otherwise remains closed air-tight so that no odors can leak out of the machine, thanks in part to a special exhaust assembly as well - is opened.

Following the opening of the hatch 2, the apparatus confirms, by analyzing the electrical conductivity and the paramagnetic and thermal characteristics of the waste products, as well as their hardness, whether the correct category has been selected on the control panel (this feature proves particular useful in the treatment of products with similar characteristics, such as iron and aluminum, which could possibly be confused); following confirmation of the product category, the hatch 2 goes back to the closed position, and the apparatus automatically, and in a fully autonomous fashion, treats the waste and throws it into the basket corresponding to its category. When one or more of the baskets are full, a signal light alerts the user.

Based on what has been described and illustrated in the preceding paragraphs, it is clear that the machine dealt with in the present invention fully succeeds in meeting its proposed objective, meaning the elimination at the source of the problem of the formation of multi-material solid urban waste, making it possible to store all types of refuse in distinct categories and in compacted form by means of a apparatus which is both easy to use and safe, and whose maintenance and operating costs are extremely limited.

It is readily evident that the specific apparatus which has been described and illustrated represents a preferred design which can be subjected to whatever variations within the scope of the invention as defined by claim 1 should become necessary for its actual operation, or for specific uses, as in the case of apparatuses created for establishments open to the public, for offices, etc..

## Claims

1. An apparatus for separately receiving, compacting and storing different categories of solid urban waste at home, comprising:
an upper section (7) having a hatch (2) through which the waste is introduced and a plurality of waste-treament devices (9,13) where the waste is compacted;
a lower section (8) housing a plurality of containers (5) for separate fractions of solid waste;
means for positioning each container (5) underneath a corresponding waste-treatment device; and
a control panel (6) having separate buttons for each kind of waste to be collected for activating the positioning means of the containers (5) so that the appropriate container is positioned underneath the corresponding waste-treatment device;
**characterized in that**:
said waste-treatment devices (9,13) are installed on a rotating platform having positioning means for moving and aligning each waste-treatment device with the hatch (2); in that
the control panel buttons also activate said positioning means of the waste-treatment devices (9,13) so that the appropriate waste-treatment device is lined up with the insertion hatch; and in that
the apparatus further comprises: a) means for analyzing one or more properties of the waste to be disposed of; b) means for checking that the type of waste selected on the control panel (6) corresponds with the results of the analysis; and d) means for blocking the waste-treatment process in the event that the selected type of waste does not correspond with the analysis results.

2. An apparatus designed according to the preceding claim, including a waste-treatment device for organic materials; the first phase in the operation of this device involves the drying of the waste material, following which the material is ground up with the proper equipment and left to fall into the appropriate basket below;

3. An apparatus designed according to the preceding claims, distinguished by the fact that it includes a device for the treatment of plastic waste and similar materials, consisting of a compactor 9 whose components include a number of rollers, three for example, arranged in close proximity to one another and set in rotation by a motor, preferably electrical, in such a way as to crush, while pushing in a forward direction, the product to be treated; the rollers 10 can be equipped with teeth or protuberances which facilitate the crushing of the plastic containers inserted between them, allowing whatever air has been trapped inside the containers to be expelled; at the end of the treatment, the waste product falls into the proper storage basket.

4. An apparatus designed according to the preceding claims, characterized by the fact that it includes a device for the treatment of metals, with this device consisting of a press driven by a motor 14, preferably electric, which is connected to the press by appropriate belts; the motor moves the plate 16 along the worm screw 15 until the waste to be disposed of has been fully compressed; at the end of the compression process, the entire press shifts to an inclined position so that the compressed waste can fall into the proper container below.

## Patentansprüche

1. Eine Einrichtung für die Aufnahme, die Verdichtung und die separate Verwahrung verschiedener Arten fester Hausabfalle, die folgendes einbegreift
eine obere Sektion (7), bestehend aus einer Kipptür (2), durch welche die Abfälle eingefuhrt werden, und einer Reihe von Vorrichtungen für die Abfällverarbeitung (9,13), in denen die Abfallprodukte komprimiert und verdichtet werden
eine untere Sektion (8), die eine Reihe von Behältern (5) für die verschiedenen Arten fester Abfälle enthalt
die Geräte für die Positionierung eines jeden Behälters (5) unter die entsprechende Verarbeitungsvorrichtung, und
eine Schalttafel (6) mit separaten Schaltern für jede der verschiedenen einzusammelnden Abfallarten; über diese Schalter wrden die Positionierungsvorrichtungen für die Behälter gesteuert (5): der passendste Behälter wird unter die entsprechende Abfall-Verarbeitungsvorrichtung geführt;
und die sich dadurch auszeichnet, daß
die vorstehenden Abfall-Verarbeitungs-Vorrichtungen (9,13) auf ciner Drehscheibe angeordnet sind, die über Positionierungs-Vorrichtungen verfügt, die Aufgabe haben, jede Abfall-Verarbeitungsvorrichtung in Richtung Kipptür (2) zu bewegen und auf diese auszurichten, wie auch dadurch, daß
die Schalter der Schalttafel auch die vorgenannten Positionselemente der Abfall-Verarbeitungsvorrichtungen (9,13) in der Weise aktivieren, daß die passende Müllverarbeitungsvorrichtung auf die Kipptür ausgerichtet wird; sie zeichnet sich ebenfalls durch folgende Tatsachen aus:
- Die Vorrichtung umfaßt außerdem
a) die Geräte für die Analyse einer oder mahrerer Eigenschaften der zu entsorgenden Abfälle
b) die Geräte, die überwachen, duß die auf der Schalttafel (6) eingestellte Abfallart auch dem Ergebnis der Analyse entspricht
c) die Vorrichtungen für die Unterbrechung des Müllverarbeitungs-Prozesses, sollte die gewählte Abfallart nicht dem Ergebnis der Analyse entsprechen.

2. Eine entsprechend den vorstehenden Ansprüchen entworfene Einrichtung mit einer Müllverarbeitungs-Vorrichtung für organisches Material; in der orsten Phase der Bearbeitung durch diese Vorrichtung werden die Abfälle getrocknet,anschließend in einem eigens dafür vorgesehenen Gerät zerkleinert und dann in einem darunter vorgesehenen Korb aufgefangen;

3. Eine entsprechend den vorstehenden Ansprüchen entworfene Einrichtung die sic dadurch auszeichnet, daß sie eine Vorrichtung für die Verarbeitung von Kunststoff-Abfällen und aus ähnlicherm Material bestehendem Müll umfaßt; sie besteht aus einem "Kompaktierer" (9), der das Material verdichtet, und der aus einer Reihe Walzen besteht: zB, drei davon nebeneinander, angetrieben durch einen (vorzugsweise elektrischen) Motor, damit das zu behandelnde Produkt zerkleinert und vorangeschoben wird; die Walzen (10) können verzahnt oder mit Protuberanzen ausgerüstet sein, damit die Zerkleinerung der eingeführten Plastikbehälter gefördert und die eventuell noch in den Behältern befindliche Luft ausgestoßen wird; am Ende des Verarbeitungprozesses werden die Abfälle in den eigens dafür vorgcsehenen Korb geleitet;

4. Eine entsprechend den vorstehenden Ansprüchen entworfene Einrichtung, die sich dadurch auszeichnet, daß sie eine Vorrichtung für die Verarbeitung von Metallen umfaßt und diese in einer durch einen (vorzugsweise elektrischen) Motor (14) angetriebenen Presse besteht; der Motor ist mit der Presse über eigens dafür vorgesehene Riemer verbunden und treibt die Presse (16) längs der Schnecke (15) an, und zwar solange, bis die zu verarbeitenden Abfälle nicht vollständig komprimiert worden sind; nach Abschluß des Verdichtungsprozesses nimmt die Presse eine Schrägstellung ein und die verdichteten Abfälle fallen in den eigens dafür vorgesehenen Auffangbehälter.

## Revendications

1. Un appareil pour recevoir, compacter et stocker séparément différentes catégories de déchets urbains solides à la maison, comprenant:
une section supérieure (7) avec une trappe pour introduire les déchets et plusieurs unités de traitement (9,13) où les déchets sont compactés.
une section inférieure (8) avec des containers (5) pour séparer les fractions de déchets solides.
les dispositifs pour placer chaque container (5) sous l'unité de traitement des déchets appropriée.
un panneau de contrôle (6) avec des boutons spécifiques pour chaque type de déchets à collecter, pour activer les dispositifs de positionnement des containers (5), de sorte que le container appropriée soit placé sous l'unité de traitement correspondante;
Caractérisé par :
Les unités de traitement des déchets (9,13) sont montées sur une plateforme tounante ayant des dispositifs de positionnement pour povoir aligner chaque unité de traitement avec la trappe(2)
Les boutons du panneau de contrôle commandent les dispositifs de positionnement des unités de traitement des déchets (9,13), de sorte que l'unité de traitement appropriée s'aligne avec la trappe (2)
L'appareil comprend également:
a) dispositifs pour analyser une ou plusieurs propriétés des déchets à jeter
b) dispositifs pour vérifier que le type de déchets sélectionné sur le panneau de contrôle (6) corresponde bien aux résultats de l'analyse
c) des dispositifs pour bloquer le processus de traitement des déchets si le type sélectionné de déchets ne correspond pas avec les résultats de l'analyse.

2. Un appareil desiné pour satisfaire les précédentes revendications, en y ajoutant une unité de traitement de déchets organiques. La première phase dans le processur de traitement de ladite unité consiste en le séchage du matériau. Ce dernier est ensuite broyé par un équipement approprié, puis placé dans le bac sous-jacent adéquat.

3. Un appareil dessiné pour satisfaire les précédentes revendicationes, à la différence de comprendre une unité de traitement des déchets plastiques et matériaux similaires. Celle-ci consiste en un compacteur (9) composé entre autres par un certain nombre de rouleaux -trois par example- montés à proximité les uns des autres et mis en mouvement par un moteur préférentiellement électrique, de telle façon à broyer le produit à traiter tout en le poussant dans une direction donnée. Les rouleaux (10) peuvent être munis de dents ou de protubérances facilitant le broyage des containers plastiques insérés entre eux, en permettant de toutes maniéres que l'air emprisonné dans les containers soit expulsé. A la fin du traitement, le produit du traitement tombe dans le bac de stockage approprié.

4. Apareil dessiné pour satisfaire les précédentes revendications, caractérisé par le fait de comprendre une unité de traitement des métaux, consistant en une presse mue par un moteur (14) préférentiellement électrique. La connexion moteur-presse est assurée par des courroies appropriées. Le moteur déplace la plaque (16) le long de la vis sans fin jusqu'à ce que les déchets soient complètement compactés. A la fin du processus de compactage, la presse entière bascule dans une position inclinée, de telle façon à ce que les déchets ainsi compactés tombent dans le bac sous-jacent approprié.
